# EUROPÄISCHE PATENTSCHRIFT

(11) **EP 2 118 812 B1**
(45) Veröffentlichungstag und Bekanntmachung des Hinweises auf die Patenterteilung: **11.05.2011**
(21) Anmeldenummer: 07701923.0
(22) Anmeldetag: 08.03.2007
(51) Int. Cl.: G06K 7/00, G06K 7/08, H04B 1/52

(54) **VORRICHTUNG UND VERFAHREN ZUR UNTERDRÜCKUNG EINES SENDESIGNALS IN EINEM EMPFÄNGER EINES RFID-SCHREIB-/ LESEGERÄTS**
DEVICE AND METHOD FOR SUPPRESSING A TRANSMITTED SIGNAL IN A RECEIVER OF AN RFID WRITING/READING DEVICE
DISPOSITIF ET PROCÉDÉ PERMETTANT DE SUPPRIMER UN SIGNAL ÉMETTEUR DANS UN RÉCEPTEUR D'UN APPAREIL DE LECTURE/ÉCRITURE RFID

(30) Priorität: 29.01.2007 CH 146072007
(43) Veröffentlichungstag der Anmeldung: 18.11.2009
(73) Patentinhaber: Intermec IP Corp., Everett, WA 98203 (US)
(72) Erfinder: BRAUNER, Thomas, Martin, 8706 Meilen (CH); KÜNG, Roland, CH-8633 Wolfhausen (CH)
(74) Vertreter: Grünecker, Kinkeldey, Stockmair & Schwanhäusser Anwaltssozietät
(86) Internationale Anmeldenummer: PCT/CH2007/000124
(87) Internationale Veröffentlichungsnummer: WO 2008/092283

(56) Entgegenhaltungen:
- WO-A-2005/109500
- US-A1- 2006 098 765

## Beschreibung

Die Erfindung fällt in das Gebiet der Kommunikationstechnik. Sie betrifft eine Vorrichtung und ein Verfahren zum Betrieb eines RFID Schreib-/Lesegeräts mit einer Sendesignalunterdrückung, wobei das RFID Schreib-/Lesegerät einen Sender, einen Empfänger mit einem Signalprozessor, einen Richtkoppler mit einem ersten, zweiten, dritten und vierten Tor und eine Antenne umfasst.

### Stand der Technik

RFID Systeme bestehen aus einem RFID Schreib-/Lesegerät (Reader) und elektronischen Etiketten (Tag). Letztere können passiv, d.h. ohne Batterie arbeiten und sind damit auf dauernde Anwesenheit eines vom RFID Schreib-/Lesegerät ausgesendeten Trägersignals angewiesen, auch Energieträger genannt. Das Trägersignal dient der Etikette zugleich als Hochfrequenzoszillator. Semi-passive Etiketten besitzen zwar eine Batterie, brauchen jedoch ebenfalls ein dauernd ausgesendetes Trägersignal anstelle eines Hochfrequenzoszillators zur Modulation. RFID Systeme mit Reichweiten von mehreren Metern benutzen dabei UHF- Frequenzen oder Mikrowellenfrequenzen. Das RFID Schreib-/Lesegerät selbst besteht aus einem Basisbandteil und einem Hochfrequenzteil (HF-Teil) mit einem Sender sowie einem Empfänger.

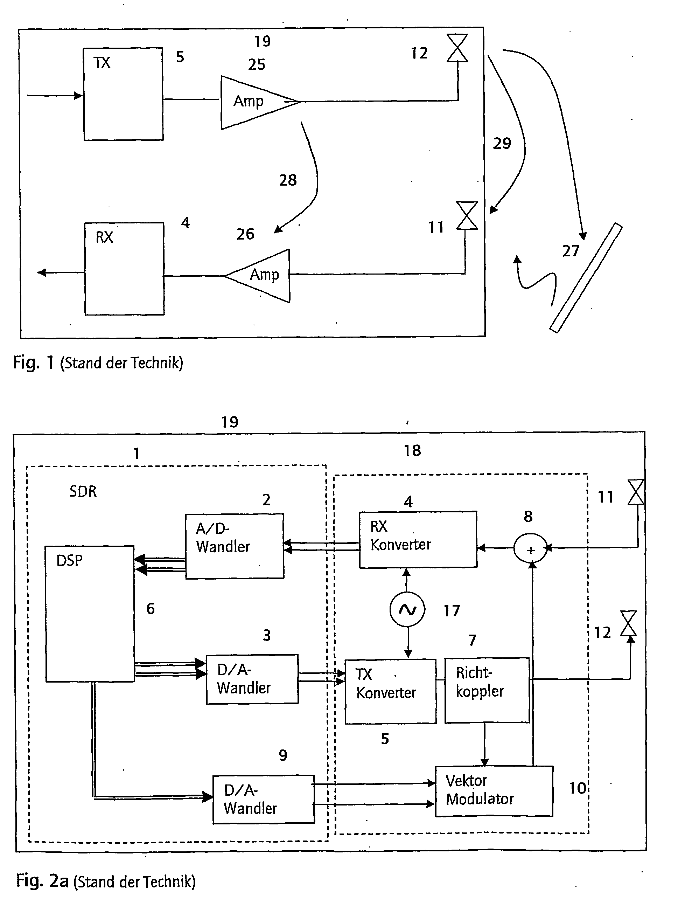

Zur Erreichung von Lesedistanzen im Bereich einiger Meter bei passiven und einigen 10 Metern bei semi-passiven elektronischen Etiketten muss ein von einem Sender TX bereit gestelltes Sendesignal mit einer Leistung von etwa 1 Watt (30 dBm) erzeugt und abgestrahlt werden. Ein wesentlicher Teil dieses vergleichsweise leistungsstarken Sendesignals koppelt dabei in störender Weise direkt in den Empfänger RX ein, siehe Fig. 1, die Kopplungspfade 28, 29 und die Reflektion an einem Reflektor 27. Andererseits müssen die Empfänger in den RFID Schreib-/Lesegeräten die geringen Pegel des Antwortsignals detektieren, welches von den Etiketten lediglich nach einer Modulation des Trägersignals mit Antwortdaten unverstärkt reflektiert wird. Eine solche resultierende, erforderliche hohe Dynamik im Empfänger des RFID Schreib-/Lesegeräts stellt eine enorme Anforderung für jedes bidirektional arbeitende System dar. Dabei kann das RFID Schreib-/Lesegerät entweder mit einer einzigen Antenne betrieben werden, wobei Sender und Empfänger durch einen Zirkulator entkoppelt werden, oder es werden zwei direkt benachbarte Antennen verwendet. In beiden Fällen ist die Isolation zwischen Sender und Empfänger bekanntermassen gering; typischerweise beträgt eine solche Isolation lediglich rund 20 dB.

Das direkt vom Sender in den Empfänger eingekoppelte Sendesignal ist somit nicht nur sehr leistungsstark, sondern auch unerwünscht, da es in den Hochfrequenzstufen des Empfängers zu Intermodulation mit dem Antwortsignal einer elektronischen Etikette führt und damit die Empfindlichkeit des Empfängers reduziert. Anders formuliert ist die Isolation vom Sender TX zum Empfänger RX für ein RFID Schreib-/Lesegerät für grosse Reichweiten in der Praxis im UHF- und Mikrowellenbereich viel zu gering. Die Isolation wird bestimmt durch den Aufbau des RFID Schreib-/Lesegeräts und insbesondere durch die Technologie des Zirkulators am Antennenausgang bzw. durch die Anordnung der verwendeten Sende- und Empfangsantennen. Die Verwendung eines Zirkulators kann im Folgenden gleich behandelt werden wie die Verwendung getrennter Antennen. Letztere wird hier stellvertretend für beide Verwendungen erörtert.

Ein Zahlenbeispiel zeigt die oben erläuterte Problematik wie folgt auf: Beträgt die Sendeleistung 30 dBm bei einer Isolation von 20 dB, so ergibt sich daraus ein Störsignal von +10 dBm am Empfängereingang. Das von einer passiven elektronische Etikette ausgesandte Nutzsignal beträgt im UHF-Bereich bei einer Distanz von ca. 4 m jedoch nur gerade -70 dBm. Der hohe Pegel des direkt im Empfänger eingekoppelten Sendesignals von +10 dBm überfordert somit den Eingangsverstärker eines jeden RFID Schreib-/Lesegeräts, der typischerweise ein rauscharmer Kleinsignalverstärker ist.

Es entstehen Intermodulationsfrequenzen zwischen dem eingekoppelten Sendesignal und dem Empfangssignal elektronischer Etiketten oder den Signalen anderer gleichzeitig aktiver RFID Schreib-/Lesegeräte. Wird das Empfangssignal zur weiteren Auswertung digitalisiert, entsteht also mit einer Dynamik von 80 dB zusätzlich ein Problem mit der zur Verfügung stehenden Auflösung bei den hierfür üblichen 14 bis 16 Bit Analog/Digital Wandlern. Wenn man das Problem durch Verbesserung der Komponenten allein lösen möchte, werden die Anforderungen an die HF-Komponenten und den A/D-Wandler sehr hoch und uninteressant, insbesondere was die Linearität und Stromaufnahme betrifft. Eine Unterdrückung beziehungsweise eine elektronische Kompensation des eingekoppelten Sendesignals ist zur Erzielung grosser Reichweiten somit notwendig.

Eine bekannte Empfangsarchitektur sieht deshalb eine so genannte Direct Conversion Stufe (im Folgenden auch DCS genannt) vor, um von der Hochfrequenz HF in ein Basisband zu gelangen. Werden die Daten auf der elektronischen Etikette gleichstromfrei moduliert und reflektiert, so lässt sich durch wegfiltern des Gleichspannungsanteils DC nach dem Heruntermischen in der DCS des Empfängers die Dynamik für den A/D-Wandler entschärfen. Im HF Eingangsteil eines Empfängers ändert sich jedoch nichts an der Intermodulations-Situation und es ist nach wie vor eine elektronische Kompensation notwendig. Da durch die Entfernung des Gleichspannungsanteils der Beitrag des eingekoppelten Sendesignals im Basisband eliminiert wird, muss er in einer zusätzlichen Schaltung erfasst und verarbeitet werden. In der Praxis wäre ein maximales Empfangssignal mit einem Pegel von beispielsweise -10 dBm wünschenswert. Gemäss oben stehender Berechnung ist somit zusätzlich eine Isolation von mindestens 20 dB notwendig.

In der US 2004/0106381 und der US 6229992 B1 wird vorgeschlagen, das eingekoppelte Signal im Empfänger, umfassend eine Empfangsantenne 11, eine Additionsstufe 8, einen RX Konverter 4 und einen A/D Wandler 2 in Fig. 2a, zu messen, und ein Kompensationssignal, welches direkt vom Sendesignal im HF-Teil abgeleitet ist, im aufgezeigten Empfangspfad zu addieren.

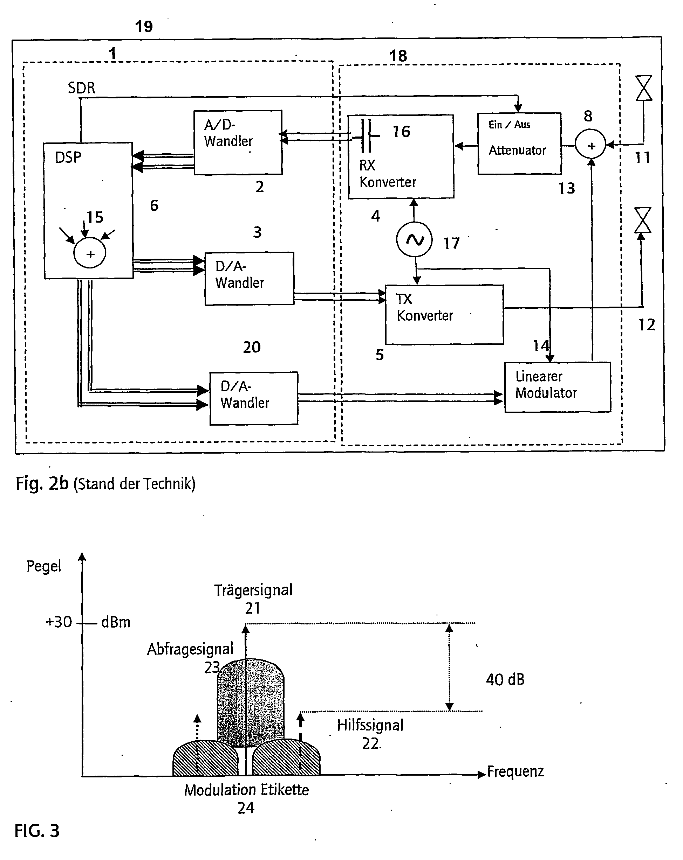

Ein Lesegerät 19 besteht bekanntermassen aus einem Software definierten Basisband Teil 1 (im Folgenden auch SDR genannt) und einem HF-Teil 18, wie in Fig. 2a, 2b dargelegt. In solchen SDR basierten Sende-/Empfangsanlagen werden die komplexwertigen Signale soweit rein rechnerisch in einem Signalprozessor 6 aufbereitet bzw. verarbeitet, dass sie nur noch mittels linearen Konvertern (Up-Converter bzw. Down-Converter) ins, beziehungsweise vom Hochfrequenzband (HF-Band) verschoben werden müssen. Ein TX Konverter 5 im Sender wird mit einem komplexen Basisbandsignal (Inphase- und Quadratur- Signal, im Folgenden auch I/Q-Signal genannt) gespeist, welches vom Signalprozessor 6 über einen zweifachen Digital/Analog (D/A)-Wandler 3 ausgegeben wird. Das Ausgangssignal wird über einen Richtkoppler 7 an eine Sendeantenne 12 weitergeleitet. Von einer Empfangsantenne 11 werden die Empfangssignale über einen RX Konverter 4 in ein komplexes Basisbandsignal (Inphase- und Quadratur- Signal) überführt und an einen zweifachen A/D-Wandler 2 weitergeleitet und vom Signalprozessor 6 übernommen. In der klassischen Lösung wird das Sendesignal aus dem ausgekoppelten HF-Signal des Richtkopplers 7 bezogen und im Sektormodulator 10 mit den Korrekturwerten für Phase und Amplitude vom DSP 6 mit Hilfe eines langsamen D/A-Wandler 9 gewichtet und in einer Additionsstufe 8 dem Empfangsignal zwecks Kompensation zugeführt.

Im einem ersten Schritt des Lesevorgangs wird üblicherweise in einer kurzen Listen-Before-Talk Phase (LBT-Phase) eines Abfragezyklus' bei ausgeschaltetem Sender eines ersten RFID Schreib-/Lesegeräts über ein Zeitintervall TO das Empfangsignal digitalisiert und analysiert. In diesem Signal sind die Abfragesignale weiterer RFID Schreib-/Lesegeräte enthalten, und es lässt sich entscheiden ob der Sender des ersten RFID Schreib-/Lesegeräts eingeschaltet werden darf oder nicht. Wird das erste RFID Schreib-/Lesegerät nach der LBT Phase auf Sendung gebracht, so muss der eigene Empfänger als erstes das eingekoppelte TX Signal kompensieren, um eine hohe Empfindlichkeit zu erreichen.

Das Kompensationssignal wird mittels einer Justierung von Verstärkung und Phase (Gain/Phase Adjuster) aus dem Sendesignal gewonnen. Diese Technik ist als adaptive Filterung bekannt. Die Justierung der Amplitude und Phase geschieht hierbei über den so genannten Vektormodulator 10 vollständig im HF-Bereich. Die Komponenten zur Auskopplung des Sendesignals, zur Addition im Empfangspfad, sowie der Vektormodulator 10 sind aber HF Komponenten, welche selber Ungenauigkeiten und Nichtidealitäten aufweisen. Eine sofort wirksame (instantane) Reduktion der Kopplung erscheint somit nur schwer möglich und ist in der Praxis nur iterativ in Zyklen: Messen/Kompensieren/Messen etc. realisierbar.

In der WO 2006037241 wird eine Architektur mit digitaler Signalverarbeitung entsprechend Fig. 2b eingesetzt; so kann durch die Erzeugung eines Korrektursignals mit einem digitalen Signalprozessor 6, gefolgt von einem D/A-Wandler 20 und einem linearen Modulator 14 das störende Signal im Empfänger kompensiert werden. Der lineare Modulator 14 muss sehr rauscharm arbeiten, da sein Rauschbeitrag mit dem zu kompensierenden Sendesignal unkorreliert ist. Das Rauschen des Sendesignals lässt sich mit dieser Vorrichtung somit nicht weiter reduzieren, weshalb auch das Trägersignal, vgl. 21 in Fig. 3, allein entsprechend rauscharm erzeugt werden muss.

In der US 2006033607 werden mehrere auf Richtkoppler basierende Vorrichtungen zur Unterdrückung des Sendesignals beschrieben, welche mindestens 2 Richtkoppler und einen Vektormodulator umfassen, um die Aufgabe zu lösen. Im Wesentlichen wird der eine Richtkoppler zur Auskopplung des Sendesignals verwendet und der zweite zur Addition des Empfangssignals mit dem Kompensationssignal aus dem Vektormodulator. Das Prinzip der Kompensation mit Vektormodulator ist im Grundsatz schon aus GB 1510625 bekannt.

In der US 5691978 wird eine Kombination von Antennenisolation, analoger HF- Unterdrückung und digitalem "Echo Canceller" im Basisband vorgeschlagen, um eine hohe Isolation zu erreichen. Der Aufwand dazu ist beträchtlich und wirtschaftlich für ein RFID Schreib-/Lesegerät nicht sinnvoll.

All diesen bekannten Verfahren ist bis auf dem in der WO 2006037241 gemeinsam, dass bei Anwendung eines auf DCS Basis aufgebauten Empfängers ein Gleichspannungssignal (DC-Signal) auszuwerten sein wird, um die Information über Amplitude und Phase des einkoppelnden Sendesignals zu erhalten. Dieses DC-Signal ist aber wiederum selber durch Kopplungseffekte an den HF-Mischern im RX Konverter mit Fehlern behaftet. Dasselbe gilt für Verfahren, welche die Detektion des Übersprechens mit einem klassischen Enveloppendetektor bewerkstelligen. Zusätzliche Probleme entstehen, wenn noch andere RFID Schreib-/Lesegeräte unbeabsichtigt gleichzeitig im selben Frequenzkanal senden, da ihre Sendefrequenzen möglicherweise nur geringfügig abweichen und so jeden Messwert verfälschen.

In der WO 2006037241 wird für die Messung der Unterdrückung die Erzeugung eines Hilfssignals 22 vorgeschlagen, um eine AC-Kopplung 16 im Empfänger 4 verwenden zu können. Diese Massnahme verhindert eine Übersteuerung des niederfrequenten Empfänger Teils bis zum A/D-Wandler und reduziert die Anforderung an die Dynamik des A/D-Wandlers. Bei Anwesenheit eines Sendesignals eines weiteren störenden RFID Schreib-Lesegeräts, kann argumentiert werden, dass eine Kalibrierung unter Umständen gar nicht durchführbar ist. Dieses Problem wird entweder durch die Vorschrift zur Nutzung von LBT gelöst oder durch eine Synchronisation des ganzen RFID Schreib-/Lesegeräte Netzwerkes.

### Darstellung der Erfindung

Es ist deshalb Aufgabe der vorliegenden Erfindung eine Vorrichtung und ein Verfahren zum Betrieb eines RFID Schreib-/Lesegeräts mit einer Sendesignalunterdrückung dahingehend weiterzuentwickeln, dass neben einer verbesserten Sendsignalunterdrückung im Weiteren auch das Rauschen des Sendersignals mit unterdrückt wird und die Vorrichtung besonders einfach und kostengünstig ausfällt. Die vorliegende Erfindung soll auch für eine Anwendung mit einem Hilfssignal eingesetzt werden können und ein angepasstes Verfahren zur Kalibration beinhalten.

Die Lösung der der Erfindung zugrunde liegenden Aufgabe ist für die Vorrichtung in Anspruch 1 angegeben. Diesen Erfindungsgedanken weiterbildende Merkmale sind Gegenstand der Unteransprüche 2 bis 12.

Die Lösung der der Erfindung zu Grunde liegenden Aufgabe für das Verfahren in Anspruch 13 angegeben. Weiterbildende Merkmale sind in den Unteransprüchen 14 bis 21 aufgeführt.

Erfindungsgemäss wird ein Teil eines Sendesignals in einem Richtkoppler am Antennenausgang eines RFID Schreib-/Lesegeräts derart eingesetzt, dass eine in Amplitude und Phase gewichtete Kopie des Sendesignals in den Eingang eines Empfängers reflektiert wird, welches als Reflexionssignal somit direkt von einem störenden Kopplungssignal zwischen dem Sender und dem Empfänger subtrahiert wird. Den Grad der Reflexion und die zugehörige Phase wird über einen erfindungsgemässen Reflexionsmodulator eingestellt. Dabei ist es von Vorteil, dass dem Sendesignal -und damit auch dem Reflexionssignal, welches ja eine gewichtete Kopie dieses Sendesignals darstellt- ein Hilfssignal mit einem Frequenzoffset fd zu einem Trägersignal des RFID Schreib-/Lesegeräts aufgeprägt wird, zwecks einer gleichspannungsfreien Verarbeitung im Empfänger nach einem RX Konverter.

Besonders vorteilhaft ist dabei, dass weniger Bauelemente für diese Aufgabe bereitzustellen sind als in den bekannten Lösungen des Standes der Technik. Die auf diese Weise kostengünstig und Platz sparend erreichte, verbesserte Dämpfung.erlaubt nun erstmalig, auch den Rauschanteil des Sendesignals zu reduzieren und den gesamten Empfangsteil auf eine massgeblich verkleinerte Dynamik des zu erwartenden Einganssignals auszulegen. Demzufolge ist mit einer solchen Dynamikanpassung, eine erhöhte Empfindlichkeit gegenüber Antwortsignalen von elektronischen Etiketten erreichbar. Ein sicheres Erkennen und Verarbeiten solcher Antwortsignale geht damit vorteilhaft einher.

Der verwendete Richtkoppler ist nach bekanntem Stand der Technik aufgebaut. Die dem Richtkoppler innewohnende Koppeldämpfung ersetzt ein zusätzliches Dämpfungsglieds zwischen Senderausgang und Empfängereingang zur Erreichung einer ersten Isolation, bzw. ersetzt den oftmals auch verwendeten Zirkulator. Die Sendeleistung kann zusätzlich ohne weiteren Richtkoppler ebenfalls bestimmt werden, so dass insgesamt ein einziger Richtkoppler zur Erfüllung aller Aufgaben genügt. Des Weiteren eignet sich die Vorrichtung ebenfalls für die Anwendung eines Verfahrens mit einem Hilfssignal, um eine quasi unmittelbare Kompensation eingekoppelter Sendesignalanteile zu erreichen. Dazu kann in einem ersten Schritt das Reflexionssignal durch vollständige Wellenanpassung ausgeschaltet werden, um die Amplitude und Phase des eingekoppelten Signals zu messen und in einem Signalprozessor zur Berechnung der Einstellgrössen für den Reflexionsmodulator bereitzustellen. Nach dem Einschalten des Kompensationssignals wird die Unterdrückung sofort wirksam und kann durch regelungstechnische Verfahren weiter erhöht werden.

Ferner werden mit der erfindungsgemässen Vorrichtung äussere Reflexionen oder geräteinternes Übersprechen zwischen Baugruppen des Sende- und des Empfangspfades unmittelbar kompensierbar. Eine Ausgestaltung der erfindungsgemässen Vorrichtung sieht vor, dass durch die Wahl einer geeigneten Koppeldämpfung des Richtkopplers ein Übersteuern und damit Intermodulationen im Empfänger verhindert werden, um eine erste Gewichtung für das Reflexionssignal bereitzustellen. Der Richtkoppler übernimmt die gleichzeitigen Funktionen eines Attenuators und einer Additionsstufe am Empfängereingang. Das dadurch ebenfalls abgeschwächte Empfangssignal ist aber für passive Etiketten immer noch stark genug für eine zuverlässige Detektion im RFID Schreib-/Lesegerät.

Eine weitere Ausgestaltung der Erfindung ermöglicht die Kompensation der zum Empfänger gelangenden Signale, welche auf Grund der Reflexion des Sendesignals wegen der nicht perfekten Anpassung der Antenne eines RFID Schreib-/Lesegerätes an die Bezugsimpedanz entstehen. Durch die erhöhte Isolation eines Richtkopplers im Vergleich zu einem Zirkulator ist die Genauigkeit der Anpassung einer Antenne an den Sender oft die kritische Grösse, welche den grössten zu kompensierenden Signalanteil ausmacht.

Die Vorrichtung gemäss der Erfindung ermöglicht ebenfalls die Messung der Sendeleistung indem der Reflexionsmodulator auf volle Reflexion eingestellt wird, so dass die im Richtkoppler ausgekoppelte Leistung zum Empfänger reflektiert wird und dadurch ein zumindest um den Koppelfaktor skalierter Teil der Sendeleistung zum Empfängereingang transportiert wird und dort gemessen werden kann. Durch ein vor dem Reflexionsmodulator eingefügtes Dämpfungsglied kann der gewünschte Messbereich skalierbar gehalten werden.

Vorteilhaft ist, dass die Leistung um den Koppelfaktor des Richtkopplers reduziert auf den Reflexionsmodulator gelangt. Damit sind die zu absorbierende Leistung im thermisch unkritischen Kleinsignalbereich und der Fehlbetrag des Sendesignals auf der Antennenleitung, deren Leistung bestimmt werden soll, vernachlässigbar klein.

Sämtliche weiteren, vorteilhaften Ausgestaltungen der erfindungsgemässen Vorrichtung werden nachfolgend beschrieben. Da die Vorteile und Ausgestaltungen hinsichtlich des die Aufgabe der Erfindung lösenden Verfahrens unmittelbar mit der erörterten, erfindungsgemässen Vorrichtung einhergeht, wird aus textökonomischen Gründen auf die obige Schilderung verwiesen und hier keine Wiederholung angeführt.

### Kurze Beschreibung der Zeichnung

Im Folgenden wird die Erfindung anhand von Figuren beispielhaft erläutert. Gleiche Gegenstände sind in den Figuren grundsätzlich mit gleichen Bezugszeichen bezeichnet. Es zeigen rein schematisch die
- Fig. 1: eine bekannte Architektur eines RFID Schreib-/Lesegeräts mit einigen nahe liegenden Kopplungspfaden;
- Fig. 2a: eine bisher angewendete Vorrichtung zur Kompensation eines Kopplungssignals von einer Senderantenne zu einer Empfängerantenne;
- Fig. 2b: eine weitere konventionelle Vorrichtung zur Kompensation eines Kopplungs- signals von einer Senderantenne zu einer Empfängerantenne;
- Fig. 3: ein Spektrum mit einem Sendesignal des RFID Schreib-/Lesegeräts, einem Ant- wortsignal elektronischer Etiketten und einem Hilfssignal;
- Fig. 4: ein erfindungsgemässes RFID Schreib-/Lesegerät, umfassend einen Hoch- frequenz-Sende- und Empfangsteil mit einem Richtkoppler und einem Refle- xionsmodulator;
- Fig. 5: dieses RFID Schreib-/Lesegerät mit dem Richtkoppler nachgeschaltetem Refle- xionsmodulator mit Pegelinformationen;
- Fig. 6: eine erste Ausführungsform des Reflexionsmodulators gemäss der Erfindung, und
- Fig. 7: weitere Ausführungsform des Reflexionsmodulators.

### Wege zur Ausführung der Erfindung

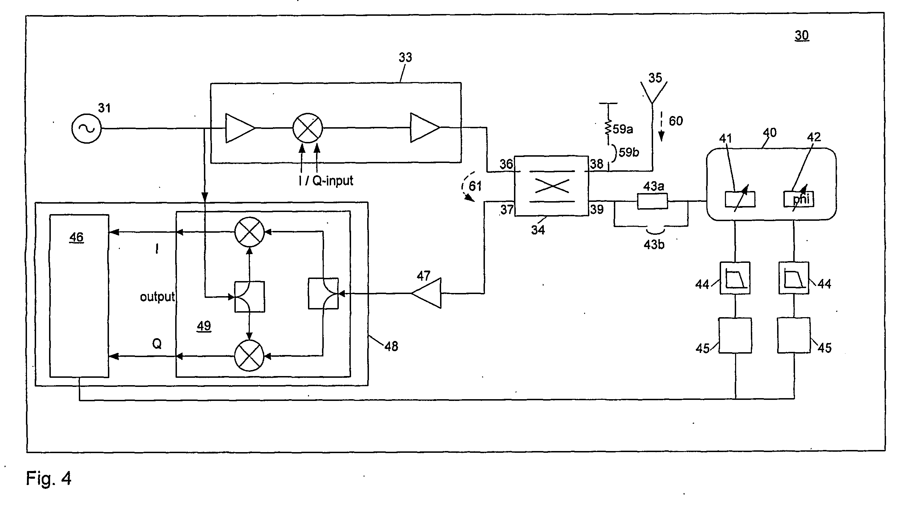

Die vorliegende Erfindung zeigt anhand der Fig. 4 eine neuartige Vorrichtung und ein Verfahren zum Betrieb eines RFID Schreib-/Lesegeräts 30 mit einer Sendesignalunterdrückung, um eine Kompensation eines von einer Sendebaugruppe 33 in eine Empfängerbaugruppe 48 eingekoppelten Sendesignals vorteilhaft auszugestalten. Die Sendebaugruppe 33 ist von der Empfangsbaugruppe 48 durch einen Richtkoppler 34 an einem ersten Tor 36 und einem zweiten Tor 37 getrennt. An einem dritten Tor 38 des Richtkopplers 34 ist die Sende-/Empfangsantenne 35 angeschlossen und an einem vierten Tor 39 ein Reflexionsmodulator 40. Zur Frequenzkonversion wird ein HF-Oszillator 31, in Speziellen ein Festfrequenz-Oszillator, verwendet. Der Richtkoppler 34 hat zwischen dem ersten Tor 36 und dem dritten Tor 38 und zwischen zweiten Tor 37 und dem vierten Tor 39 jeweils eine möglichst geringe Dämpfung und weist zwischen dem ersten Tor 36 und dem vierten Tor 39, bzw. zwischen dem ten Tor 38 und dem zweiten Tor 37 eine definierte Koppeldämpfung von beispielsweise 20 dB auf. Zwischen dem ersten und zweiten Tor 36 und 37 sowie dem dritten und vierten Tor 38 und 39 weist der Richtkoppler 34 eine Isolation von typischerweise 40 dB auf, welche das Übersprechen bestimmen. Ein Empfangssignal von der Antenne 35 wird in dieser Vorrichtung somit um die Koppeldämpfung reduziert. Dies ist im Falle von RFID Schreib-/Lesegeräten für passive Etiketten aber kein Hindernis, da sich die Begrenzung der Schreib-/Lesedistanz durch die von der Etiketten gewinnbare Leistung des Sendesignals ergibt und das Empfangssignal an der Antenne genügend Reserve im Pegel aufweist. Weiter zu berücksichtigen ist, dass durch jede nicht perfekt angepasste Antenne ein Teil der Sendeleistung reflektiert wird und am dritten Tor 38 des Richtkopplers genauso zum Empfänger geführt wird, wie das erwünschte Empfangsignal. Der Empfangsteil hat somit neben dem erwünschten Signal mindestens das Übersprechsignal vom ersten zum zweiten Tor 36 auf Tor 37 sowie das reflektierte Sendesignal vom dritten Tor 38 zum zweiten Tor 37 zu verarbeiten. Da die beiden Signale vom selben Sendesignal herrühren, ist es nicht notwendig die Herkunft der beiden Störterme zu unterscheiden, sie addieren sich vektoriell zu einem einzigen Signalterm, den es zu kompensieren gilt. Für modulierte Signale stimmt diese Tatsache ebenfalls solange die HF-Frequenz nur sehr viel grösser ist, als die Modulationsbandbreite.

Der Empfangsbaugruppe 48 ist ein Empfangsverstärker 47 vorgelagert, wobei die Empfangsbaugruppe 48 ihrerseits im Wesentlichen einen Empfangskonverter, hier einen RX-Konverter 49 mit Inphase- (I) und Quadraturausgang (Q), und einen Signalprozessor 46 umfasst. Der Übersichtlichkeit halber sei angenommen, dass sich weitere Verstärker und Filter im RX-Konverter 49 und die hier ebenfalls nicht gezeigte A/D-Wandler im Signalprozessor 46 befinden.

Am vierten Tor 39 des Richtkopplers 34 ist ein ausschaltbares, bzw. ein fixes Dämpfungsglied 43a angeschlossen, welches dem Zweck dient, den in den Reflexionsmodulator 40 einfallende Signalpegel anzupassen.

Zum besseren Verständnis sei auf die Wellentheorie von Hochfrequenzsignalen hingewiesen, wonach sich auf jeder Leitung mit einer Wellenimpedanz Zo (hier 50 Ohm) eine hin- und eine rücklaufende Welle ausbildet, abhängig vom Abschlusswiderstand ZL Der Reflexionsmodulator 40 besteht aus zwei Einstellgliedern 41 und 42, mit deren Hilfe die Phase und Amplitude der am Eingang einfallenden Welle ein erstes Mal veränderbar gemacht ist. Am internen Abschluss des Reflexionsmodulators 40, ein Hochfrequenz tauglicher Kurzschluss (ZL = 0), wird die veränderte Welle reflektiert und durchläuft die beiden Einstellglieder 41, 42 erneut, um dann am vierten Tor 39 des Richtkopplers 34 als reflektierte Welle auszulaufen. Die am vierten Tor 39 einfallende, vom Reflexionsmodulator 40 reflektierte Welle addiert sich im Richtkoppler 34 zum Übersprechsignal vom ersten Tor 36 zum zweiten Tor 37 und dem von der Antenne 35 reflektierten Signal. Bei richtiger Einstellung der Amplitude und Phase der vom Reflexionsmodulator reflektierten Welle kann somit der störende Sendesignalpegel am Eingang der Empfangsbaugruppe 48 reduziert werden. Die Einstellung der Phase und Amplitude erfolgt vom Signalprozessor 46 über ein D/A-Wandler Paar 45 und ein Tiefpassfilterpaar 44.

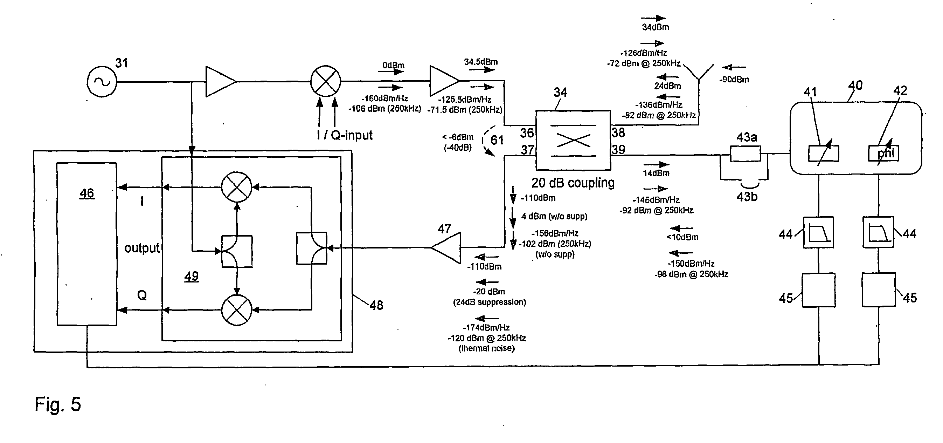

Um die Funktionstüchtigkeit der Vorrichtung nachzuweisen, soll im Folgenden das Pegeldiagramm von Fig. 5 erläutert werden. Ausgehend von einer typischen Anwendung im UHF Bereich mit Sendeleistung von +34 dBm und dem Minimum an Empfangspegel für das Tagoder Etikettensignal von -90 dBm sowie einer belegten Bandbreite von 250 kHz ergibt sich folgender Pegelplan. Das Sendesignal gelangt mit 34.5 dBm zum ersten Tor 36 des Richtkopplers 34 und wird mit 34 dBm von der Antenne abgestrahlt. Der Rauschpegel des Sendesignals wir mit -125.5 dBm/Hz Dichte angenommen, also mit -126 dBm/Hz abgestrahlt wird. Der Richtkoppler 34 habe eine Koppeldämpfung von 20 dB und eine Durchlassdämpfung von 0.5 dB. Die Antenne 35 sei mit einer Reflexionsdämpfung von 10 dB eher schlecht an Zo angepasst, so dass eine hohe reflektierte Leistung von 24 dBm mit einer Rauschleistungsdichte von -136 dBm/Hz (-82 dBm bei 250 kHz Bandbreite) zum dritten Tor 38 des Richtkopplers 34 zurückläuft. Das Empfangssignal sowie das reflektierte Signal von der Antenne erscheinen an zweiten Tor 37 um die Koppeldämpfung verringert mit 4dBm bzw. -110 dBm und einer Rauschleistungsdichte -156 dBm/Hz (-102 dBm). Es ist zu sehen, dass die Detektion der Tag-Antwort ohne Trägersignalunterdrückung nicht möglich ist, da ein Signal/Geräuschverhältnis von -110 - (-102) = -8 dB entsteht. Des Weiteren stellt der Pegel von 4 dBm am zweiten Tor 37 für die meisten Empfangsverstärker ein Problem dar und führt zu der dem Fachmann bekannten Intermodulation.

Erfindungsgemäss wird nun vom Sendesignal ein um die Koppeldämpfung verminderter Anteil vom ersten Tor 36 zum vierten Tor 39 ausgekoppelt, so dass aus dem vierten Tor 39 eine Kopie des Sendesignals mit dem Pegel 14 dBm und der Rauschleistungsdichte -146 dBm/Hz läuft. Dieses Signal wird durch das fixe Dämpfungsglied 43a und das einstellbare Dämpfungsglied 41 im Reflexionsmodulator 40 nun so abgeschwächt reflektiert, dass am zweiten Tor 37 des Richtkopplers 34 so gut wie möglich derselbe Trägersignalpegel wie von der Antenne herrührend (4 dBm) auftritt. In der Praxis wird hier stets ein Restfehler vorhanden sein, so dass keine vollständige Unterdrückung eintritt, nicht zuletzt auch weil das reflektierte Signal aus dem Reflexionsmodulator 40, durch eine variable Phasenschieberstufe 42 in der Phase gedreht, nie ganz präzise gegenphasig (180°) sein wird. Im Beispiel sei angenommen, dass die Unterdrückung 24 dB betrage (entspricht einem Schätzfehler von z.B. 0.6 dB und 6°). Damit werden am zweiten Tor 37 des Richtkopplers 34 also etwa -20 dBm Restpegel des Trägersignals anliegen. Weil der vom Reflexionsmodulator 40 sowie von der Antenne reflektierte Trägersignalanteil exakt dasselbe Rauschen beinhaltet, wird auch die Rauschleistungsdichte um 24 dB gedämpft zu -180 dBm/Hz. Dieser Pegel liegt aber, wie der Fachmann weiss, unterhalb des thermischen Grundrauschens von -174 dBm/Hz, welches bei Raumtemperatur nicht zu unterschreiten möglich ist. Mit anderen Worten kann in diesem Beispiel nicht mehr die ganzen 24 dB Unterdrückung des Rauschens erzielt werden und es würde eine weitere Unterdrückungsverbesserung nur noch das Trägersignal reduzieren nicht mehr aber die Rauschleistungsdichte. Wir erhalten am Eingang des Empfangsverstärkers 47 somit einen störenden Signalpegel vom Trägersignal von -20 dBm und eine Rauschleistungsdichte von -174 dBm/Hz (-120 dBm), während das Nutzsignal vom Tag bei -110 dBm verbleibt. Das Signal/Geräuschverhältnis beträgt neu -110 - (-120) = 10 dB, was eine gute Detektion in der Empfangsbausgruppe 48 ermöglicht.

Andere Zahlenbeispiele kann der Fachmann leicht berechnen, z. B. für veränderte Anpassung der Antenne (Reflexionsdämpfung 18 dB) oder eine andere Richtkopplerdämpfung (14 dB). Für in der RFID Praxis bei stationären RFID Schreib-/Lesegeräten 30 verwendete Antennen 35 mit einer Reflexionsdämpfung von 15 dB und mehr ergibt sich eine vorteilhafte Dimensionierung mit einer Koppeldämpfung von 15 dB. Es gilt noch darauf hinzuweisen, dass eine selbige Rechnung auch für den Fall des Übersprechens des Trägersignals vom ersten Tor 36 zum zweiten Tor 37 gemacht werden kann, wobei als praktischer Wert für die Isolation von Richtkoppler-Komponenten in etwa wie im Beispiel 40 dB angenommen werden können. Im Beispiel ist dieser Koppelweg 61 somit klar der weniger kritische, da er nur etwa -6 dBm am zweiten Tor 37 des Richtkopplers 34 liefert. Des Weiteren sei erwähnt, dass dem Reflexionsmodulator 40 eine gewisse Dämpfung zugestanden werden muss, welche dieser technisch nicht unterschreiten kann. In Fig. 5 wurde für das Beispiel ein Wert von 4 dB angenommen, so dass max. ein reflektiertes Signal von 10 dBm aus dem Reflexionsmodulator 40 zum vierten Tor 39 laufen kann.

Für den Fall, dass hohe Isolation gegeben ist und nur ein sehr kleiner Pegel des reflektierte Signals vom Reflexionsmodulator 49 benötigt wird, kann es von Vorteil sein ein fixes Dämpfungsglied 43a, welches mit einem Überbrückungs-Schalter 43b ausschaltbar ist, dem Reflexionsmodulator 40 vorzuschalten, welches den Bereich des variablen Dämpfungsgliedes 41 im Einstellumfang entlastet.

Eine andere Funktion des Dämpfungsgliedes 43a kann sein, das vierte Tor 39 möglichst gut mit der Wellenimpedanz Zo abzuschliessen, so dass keine Reflexion auftritt. Dies wäre zur Kalibration von Nutzen, da in diesem Fall am Eingang der Empfangsbaugruppe 48 nur der Anteil aus dem Antennenpfad auftritt. Das Dämpfungsglied 43a ist für diesen Betriebsfall durch einen Überbrückungs-Schalter 43b ein-/ausschaltbar gestaltet. Für eine gute Anpassung ist ein Wert für die Dämpfung von 20 dB gut ausreichend.

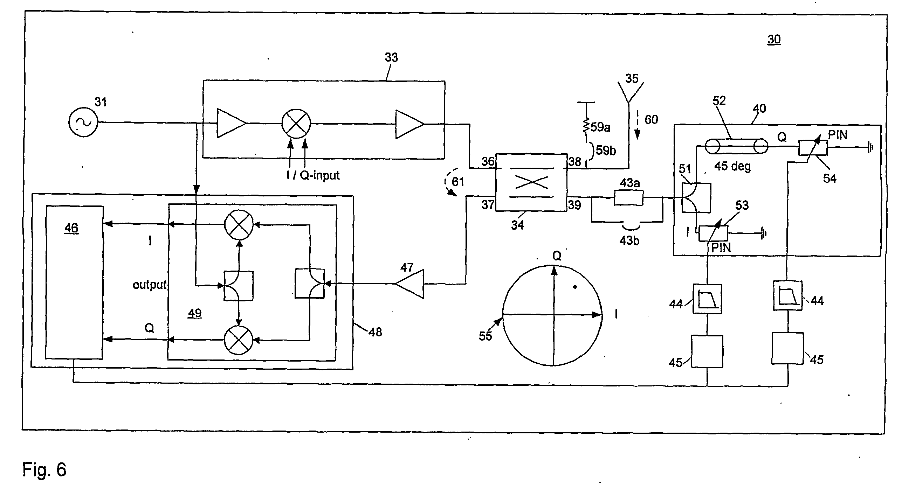

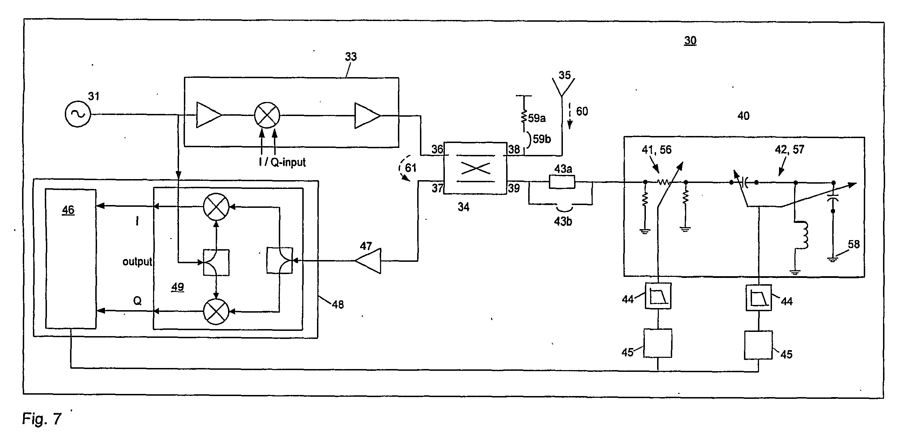

Für den Reflexionsmodulator 40 sind erfindungsgemäss mindestens zwei Realisationsmöglichkeiten vorteilhaft, welche nachfolgend anhand der Fig. 6 und 7 erläutert werden.

In einer ersten Ausgestaltung der Vorrichtung wird am vierten Tor 39 des Richtkopplers 34, an welchem der Reflexionsmodulator 40 angeschlossen ist, ein Leistungsteiler 51 mit der Impedanz Zo installiert, dessen Aufgabe es ist, die Leistung in zwei gleiche Anteile aufzuteilen. Das eine der beiden gleichen Signale wird nun im einen Zweig an einen elektronisch einstellbaren Widerstand 53 gegen Masse geführt. Dieser einstellbare Widerstand 53 besteht vorzugsweise aus einer PIN Diode (engl. *positive intrinsic negative diode*), welche -wie dem Fachmann bekannt- sich vorzüglich als linearer, steuerbarer Widerstand für HF Anwendungen einsetzen lässt. Der Widerstand der PIN Diode 53 ist bekanntermassen von einem die Diode durchfliessenden Strom Id abhängig. Da die Flussspannung der PIN Diode 53 in etwa konstant ist, kann dieser Strom Id einfach mit einer variablen Spannung aus dem Tiefpassfilter 44 über einen festen Vorwiderstand erzeugt werden. Typischerweise ist der Strom Id im Bereich von 10 µA bis 10 mA einzustellen, abhängig vom genauen Diodentyp. Damit ist es möglich den ersten Ausgang des Leistungsteilers 51 mit einem Widerstand RL abzuschliessen, derart, dass eine Reflexion infolge Fehlanpassung eintritt, solange RL ungleich der Wellenimpedanz Zo ist. Wie dem Fachmann bekannt ist, ergibt sich für RL > Zo eine Reflexion mit gleicher Phase wie die einfallende Welle, im Fall RL < Zo fällt diese gegenphasig (negatives Vorzeichen) aus. Ist RL = Zo so findet keine Reflexion statt. Diese Einstellung eignet sich zum Beispiel für die Kalibration zum Messen der Phase und Amplitude des zu kompensierenden Signals. Das zweite Ausgangssignal vom Leistungsteiler 51 wird über eine Verzögerungsleitung 52 mit der Wellenimpedanz Zo und der elektrischen Länge 45° (entspricht einem Achtel der Wellenlänge der UHF Frequenz) ebenfalls auf einen einstellbaren Widerstand 54, nämlich einer PIN Diode geführt. Diese PIN Diode 54 wird durch den zweiten Pfad D/A-Wandler 45 und einen Tiefpassfilter 44 angesteuert. Im Unterschied zum ersten Ausgangssignal wird die an der PIN Diode 54 reflektierte Welle durch erneutes Durchlaufen der Leitung 52 erneut um 45° gedreht, also insgesamt um 90°. Die beiden reflektierten Wellen addieren sich nun im Leistungsteiler 51, der auch als Leistungsaddierer funktioniert, wobei die beiden Signale gegeneinander 90° in der Phase gedreht sind und je nach Einstellung der PIN Dioden 53, 54 unterschiedliche Amplituden aufweisen. Wie in einen Diagramm 55 skizziert, ist es somit möglich (infolge der I/Q-Aufteilung), den ganzen Bereich nach Betrag von 0 - 1 und nach Phase 0 - 360° für den Reflexionsfaktor abzudecken, was in der Praxis mehr als ausreichend ist. Generell wird man jedoch nicht an die Grenzen gehen müssen, da das Übersprechen ja eine gewisse inhärente Dämpfung aufweist und sich somit die Anforderungen an die Bereiche, welchen durch die PIN Dioden 53, 54 verstellbar sein müssen, gut realisierbar ausfällt.

Eine weitere Ausführungsform der oben beschriebenen Vorrichtung besteht darin, dass anstelle der PIN Dioden 53, 54 Feldeffekt-Transistoren (FET) im ohmschen Bereich betrieben verwendet werden. Dem Fachmann ist bekannt, wie die Spannungsansteuerung eines solchen FET Widerstandes zu bewerkstelligen ist. Je nach Steuerspannung kann auch so der Widerstand im Bereich RL > Zo und RL < Zo eingestellt werden.

In einer weiteren Ausgestaltung für den Reflexionsmodulator 40 von Fig. 4 wird, wie in Fig. 7 abgebildet, das Signal vom vierten Tor 39 des Richtkopplers 34 auf ein elektronisch einstellbares Dämpfungsglied 56 geführt. Solche Dämpfungsglieder 56 für die HF Technik mit der Wellenimpedanz Zo sind bekannt und bestehen vorzugsweise aus PI- oder T-Gliedern mit elektronisch steuerbaren Widerständen, die entweder aus PIN Dioden oder FETs und kostengünstig in integrierter Bauweise herstellbar sind. Sie lassen sich kontinuierlich analog oder in feinen Stufen digital einstellen. Für den letzteren Fall würde die eine Hälfte D/A-Wandler 45 und Filter 44 entfallen (hier nicht gezeichnet). Hinter dem elektronisch einstellbaren Dämpfungsglied 56 wird das Signal in eine elektronisch einstellbare Phasenschieberstufe 57, ebenfalls mit der Impedanz Zo realisiert, geführt, welche mit einem Kurzschluss 58 gegen Masse abgeschlossen ist. Die elektronisch einstellbare Phasenschieberstufe 57 besteht aus einem LC-Filter, vorzugsweise in T-Schaltung, so dass diese Stufe ein Filter darstellt. Solche Filter haben einen Phasengang, welcher von der Anzahl Komponenten und der Grenzfrequenz abhängig ist. Für weitere Details sei beispielhaft auf folgende Literaturstelle verwiesen: Low-Loss Analog Phase Shifter Using Varactor Diodes, A. Megej et al., Microwave & Optical Technology Letters, Vol.19, No.6, 20.12.1998. Als einstellbare Glieder können Kapazitätsdioden zum Einsatz gelangen. Hierbei handelt es sich um im Sperrbereich angesteuerte, spezielle HF-Dioden (auch Varaktor genannt), deren Sperrschichtkapazität eine Funktion der Sperrspannung ist und als elektronisch einstellbare Filterkapazität dient. Weitere elektronisch einstellbare Phasenschieber 57 sind aus Fachliteratur bekannt und basieren beispielsweise auf neuartigen Ferritmaterialen oder aufwändigeren Schaltungen mit Richtkopplern, welche hier nicht ausgeführt werden, da sie nicht zu einer Kosten sparenden Lösung beitragen. Es mit dieser Lösung möglich für den Reflexionsfaktor 40 den ganzen Bereich von 0 - 1 und 0 - 360° abzudecken.

Anstelle von LC-Filter Kombinationen kann auch eine Filterstruktur mit RC-Gliedern eingesetzt werden, wobei die Ordnungszahl des Filters für dieselbe Phasendrehung verdoppelt werden muss. Ebenso könnte anstelle des Kurzschluss 58 ein Leerlauf verwendet werden, der aber weniger genau herstellbar ist zusammen mit einer PI-Struktur des Filters.

Eine weitere Ausgestaltung der Erfindung erlaubt es, durch entsprechende Einstellung des Reflexionsmodulators 40, die Sendeleistung eines RFID Schreib-/Lesegeräts zu messen. Wird der Reflexionsmodulator 40 auf Vollreflexion eingestellt, so wird ein proportionaler Anteil der Sendeleistung, nämlich reduziert um die Koppeldämpfung des Richtkopplers 34, zum vierten Tor 39 des Richtkopplers 34 reflektiert und am zweiten Tor 37 der Empfangsbaugruppe 48 zwecks Messung zur Verfügung gestellt. Der Vorteil liegt darin, dass kein zweiter Richtkoppler für diese Aufgabe benötigt wird. Um diesen Zustand der Vollreflexion zu erreichen, müssen bei der Variante in Fig. 6 lediglich die beiden PIN Dioden 53, 54 sehr niederohmig gemacht werden und das allenfalls verwendete fixe Dämpfungsglied 43a überbrückt werden.

Die Erfindung beinhaltet auch ein Verfahren zur instantane Einstellung einer Trägerunterdrückung und zur Regelung derselben. Das einfachste Verfahren misst die Gleichspannung, welche an Empfangseingängen I und Q des Signalprozessors 46 auftreten und ein bekannter Regelalgorithmus regelt diese Spannungen auf ein Minimum, theoretisch 0 Volt, wenn die in praktischen Schaltung auftretenden Offsetspannungen am Ausgang des RX-Konverters 49 vernachlässigbar klein sind. Falls dies nicht zutrifft, können diese Offsetspannungen in einer vorausgehenden Messperiode ohne Sendesignal gemessen und zum Regelziel addiert werden.

Um einen instantane Unterdrückung des störenden Trägersignals 21, vgl. Fig. 3, zu erhalten, kann erfindungsgemäss wie folgt verfahren werden. Während die Senderbaugruppe 33 aktiviert ist und Leistung abgibt, wird der Reflexionsmodulator 40 für eine bestimmte Messzeit T1 auf den Wert Zo eingestellt, wobei die Einstellgrössen im Signalprozessor 46 bekannt sind. An der Empfangsbaugruppe trifft nun das volle zu kompensierende, reflektierte Trägersignal 21 ein und kann in seiner Amplitude und Phase gemessen werden. Um die Amplitude und Phase des Signalpfades des vom Reflexionsmodulator 40 reflektierten Signals zu bestimmen, welches später zur Kompensation dient, wird der Ausgang der Sendebaugruppe 33 für eine bestimmte Messzeit T2 mit dem Schalter 59b auf einen Abschlusswiderstand 59a mit der Impedanz Zo umgeschaltet. Gleichzeitig wird der Reflexionsmodulator 40 auf Vollreflexion eingestellt, wobei die Einstellgrössen im Signalprozessor 46 bekannt sind. An der Empfangsbaugruppe 48 trifft nun das vom Reflexionsmodulator 40 reflektierte volle Trägersignal 21, reduziert um die Kopplungsdämpfung, ein und kann ebenfalls in Amplitude und Phase erfasst werden. Aus den beiden Grössen lässt sich nun die Korrektur in Amplitude und Phase für eine theoretisch instantane Unterdrückung des Trägersignals 21 ermitteln. Die Korrekturwerte werden im Signalprozessor 46 in Einstellungswerte für den Reflexionsmodulator 40 umgerechnet oder alternativ von im Voraus gemessenen und als Tabelle gespeicherten Einstellungen ausgelesen.

Dabei ist zu berücksichtigen, dass die gewählten Ausführungsarten zur Realisierung der Amplituden- und Phasenkorrektur im Reflexionsmodulator 40 zumindest teilweise nichtlineare Kennlinien aufweisen. Erfindungsgemäss lassen sich solche nichtlineare Kennlinien vorab messtechnisch bestimmen und durch eine weitere Umrechnung oder Tabellenkonversion im Signalprozessor 46 linearisieren. Linearisierte Kennlinien haben insbesondere bei Regelungen Vorteile in der Stabilität und Regelgeschwindigkeit.

Eine besondere Ausführung der Erfindung ermöglicht den DC-freien Betrieb der Empfangsbaugruppe 48 ohne zusätzliche Messvorrichtungen für Offsetspannungen. Dies wird erreicht, indem dem zum Lesen elektronischer Etiketten verwendeten Trägersignal 21, Fig. 3, ein schwaches Hilfssignal 22 aufmoduliert oder zuaddiert wird. Das Hilfssignal 22 wird spektral und im Pegel so ausgelegt, dass es den Nutzbetrieb in elektronischen Etiketten nicht stört.

Dieses Hilfssignal kann z.B. in einer einfachen Ausführung ein sinusförmiges Signal der Frequenz fd an der Bandgrenze sein, welches das Trägersignal 21 nur schwach in der Amplitude moduliert, beispielsweise 40 dB unter dem Pegel des Trägersignals 21. Das Hilfssignal 22 ist aber doch deutlich stärker gewählt als die Antwortsignale 24, welche von elektronischen Etikette reflektiert werden, derart, dass die Empfangsbaugruppe 48 nicht an der Empfindlichkeitsgrenze arbeiten muss, um das Kompensationssignal zu bestimmen.

Als beispielhafte Ausführung kann der Pegelplan von Fig. 3 betrachtet werden, bei dem das Hilfssignal 22 40dB schwächer ist als das Trägersignal 21. Das Kompensationssignal ist wiederum eine in Amplitude und Phasenlage bearbeitete Kopie des mit dem Hilfssignal 22 versehenen Trägersignals 21.

Erfindungsgemäss erscheint das Hilfssignal 22 in der Empfangsbaugruppe 48 nach der RX-Konverter 49 als Wechselsignal der Frequenz fd und nicht als Gleichspannung. Dies hat den Vorteil, dass man die I- und Q- Ausgänge des RX-Konverters 49, wunschgemäss wechselspannungsgekoppelt (AC) betreiben kann. Damit kann man auftretende DC-Offsets der Mischerstufen im RX-Konverter 49 und natürlich den die Dynamik begrenzenden Anteil des Trägersignals 21 selbst, einfach mit einem Hochpass-Filter (hier nicht gezeichnet) entfernen.

Damit lässt sich mit der beschriebenen Ausführung eine instantane Isolationsverbesserung erreichen, noch bevor die ersten abgefragten elektronischen Etiketten ihr schwaches Antwortsignal reflektieren. Nach dieser instantanen Kompensation kann mit der vollen Empfangsempfindlichkeit empfangen werden, ohne dass der Empfangsverstärker 47 übersteuert wird. Das eingekoppelte, nun instantan wirksam kompensierte Trägersignal 21 bleibt beispielsweise weiterhin auf einem unschädlichen Pegel unterhalb -10 bis -20 dBm reduziert. Gleichzeitig wurde erfindungsgemäss auch der Rauschanteil des Trägersignals im Sendesignal unterdrückt und dadurch die Empfangsempfindlichkeit erhöht, In der Praxis werden Resultate nahe des durch die Rauschzahl des Empfangsverstärkers 47 ohnehin begrenzenden Wertes erreicht, z.B. -115 dBm in 250 kHz Bandbreite.

Da sich elektronische Etiketten oder RFID Schreib-/Lesegeräte bei einer Abfrage bewegen können, ist das eingekoppelte Störsignal vom Trägersignal 21 zeitlich variabel. Eine laufende Messung und Nachführung der Störunterdrückung ist während des Betriebs notwendig und mit Hilfe des Hilfsträgers 22 einfach möglich. Als Regelziel wird auf Minimum der Wechselspannungsamplituden an den I- und Q- Eingängen des Signalprozessors 46 geregelt. Die Frequenzselektion geschieht vorzugsweise mit Hilfe einer Fast Fourier Transformation oder digitalen Bandpassfiltern. Weil nach der instantanen Erstkompensation der Empfänger im korrekten Signalbereich arbeiten kann, und zwar mit deutlich weniger Intermodulation als im unkorrigierten Fall, ist dieser Regelkreis nun besser zu bewerkstelligen.

### Bezugszeichen

- 1: Basisbandteil
- 2: Analog/Digital Wandler
- 3: Digital/Analogwandler
- 4: RX Konverter
- 5: TX Konverter
- 6: Digitaler Signalprozessor
- 7: Richtkoppler
- 8: Additionsstufe
- 9: Digital/Analogwandler
- 10: Vektormodulator
- 11: Sendeantenne
- 12: Empfangsantenne
- 13: Dämpfungsglied (Attenuator)
- 14: Digitale Additionsstufe
- 15: Linearer Modulator
- 16: AC Kopplung
- 17: HF Oszillator
- 18: HF Teil
- 19: Schreib-/Lesegerät
- 20: D/A Wandler
- 21: Trägersignal
- 22: Hilfssignal
- 23: Abfragesignal
- 24: Etikettensignal
- 25: Sendeverstärker
- 26: Empfangsverstärker
- 27: Übersprechen Sende- zu Empfangsverstärker
- 28: Übersprechen Sende- zu Empfangsantenne
- 29: Übersprechen durch Reflexionspfad
- 30: RFID Schreib-/Lesegerät
- 31: HF Oszillator
- 33: Sendebaugruppe
- 34: Richtkoppler
- 35: Sende-/Empfangsantenne
- 36: erstes Tor des Richtkoppler
- 37: zweites Tor des Richtkoppler
- 38: drittes Tor des Richtkoppler
- 39: viertes Tor des Richtkoppler
- 40: Reflexionsmodulator
- 41: Einstellglied für Amplitude der Reflektierten
- 42: Einstellglied für Phasendrehung der Reflektierten
- 43a: Fixes Dämpfungsglied
- 43b: erster Schalter
- 44: Tiefpassfilter
- 45: Digital-/Analogwandler
- 46: Digitaler Signalprozessor
- 47: Empfangsverstärker
- 48: Empfangsbaugruppe
- 49: RX Konverter mit I/Q- Ausgängen
- 51: Leistungsteiler, -addierer
- 52: Verzögerungsleitung
- 53: Erster elektronisch einstellbarer Widerstand
- 54: Zweiter elektronisch einstellbarer Widerstand
- 55: I/Q Darstellung reflektiertes Signal
- 56: Elektronisch einstellbares Dämpfungsglied
- 57: Elektronisch einstellbarer Phasenschieber
- 58: Hochfrequenz Kurzschluss
- 59a: Abschlusswiderstand
- 59b: zweiter Schalter
- 60: Reflexion Antenne
- 61: Isolation Sender-Empfänger

## Patentansprüche

1. Vorrichtung zum Betrieb eines RFID Schreib-/Lesegeräts (30) mit einer Sendesignalunterdrückung, wobei das RFID Schreib-/Lesegerät (30) einen Sender (33), einen Empfänger (48) mit einem Signalprozessor (46), einen Richtkoppler (34) mit einem ersten, zweiten, dritten und vierten Tor (36, 37, 38, 39) und eine Antenne (35) umfasst, **dadurch gekennzeichnet, dass** ein Reflexionsmodulator (40) am vierten Tor (39) des Richtkopplers (34) angeschlossen ist, wobei der Reflexionsmodulator (40) ein erstes Einstellglied (41, 53, 56) und ein zweites Einstellglied (42, 54, 57) aufweist, wodurch eine in Amplitude und Phase gewichtete Kopie eines Sendesignals des RFID Schreib-/Lesegeräts (30) zum Richtkoppler (34) reflektierbar ist und diese gewichtete Kopie des Sendesignals im Richtkoppler (34) zu einem Empfangssignal der Antenne (35) addierbar ist.

2. Vorrichtung nach Anspruch 1 **dadurch gekennzeichnet, dass** der Reflexionsmodulator (40) einen Signalteiler (51), eine Verzögerungsleitung (52) der elektrischen Länge 45° und einen ersten und einen zweiten elektronisch veränderbaren Widerstand (53, 54) als Abschlusslast umfasst.

3. Vorrichtung nach Anspruch 1 **dadurch gekennzeichnet, dass** der Reflexionsmodulator (40) als ein passiver Vektormodulator ausgebildet ist, umfassend ein elektronisch einstellbares Dämpfungsglied (56) und einen elektronisch einstellbaren Phasenschieber (57).

4. Vorrichtung nach Anspruch 1 bis 3 **dadurch gekennzeichnet, dass** dem Reflexionsmodulator (40) ein zuschaltbares, fixes Dämpfungsglied (43a) vorgeschaltet ist.

5. Vorrichtung nach Anspruch 2, **dadurch gekennzeichnet, dass** der erste und zweite elektronisch einstellbare Widerstand (53, 54) jeweils mittels mindestens einer PIN-Diode [positive intrinsic negative diode] realisiert sind, welche im Durchlassbereich durch einen Gleichstrom betreibbar sind.

6. Vorrichtung nach Anspruch 2 **dadurch gekennzeichnet, dass** der erste und zweite elektronisch einstellbare Widerstand (53, 54) jeweils mittels mindestens einem FeldeffektTransistor realisiert sind, welche im ohmschen Kennlinienbereich betreibbar sind.

7. Vorrichtung nach Anspruch 3 **dadurch gekennzeichnet, dass** das elektronisch einstellbare Dämpfungsglied (56) ein PI- oder T-förmiges Widerstands-Netzwerk umfasst, wobei mindestens ein Widerstand dieses Widerstands-Netzwerks elektronisch veränderbar ist.

8. Vorrichtung nach Anspruch 3 **dadurch gekennzeichnet, dass** der elektronisch einstellbare Phasenschieber (57) eine LC-Filterschaltung umfasst, wobei mindestens eine Kapazität durch eine Kapazitätsdiode ausgebildet ist, welcher im Sperrbereich eine Gleichspannung angelegt ist und deren Ausgang mit einem HF-Kurzschluss (58) abgeschlossen ist.

9. Vorrichtung nach Anspruch 3 **dadurch gekennzeichnet, dass** der elektronisch einstellbare Phasenschieber (57) eine RC-Filterschaltung umfasst, wobei mindestens eine Kapazität durch eine Kapazitätsdiode ausgebildet ist, welcher im Sperrbereich eine Gleichspannung angelegt ist oder wobei die Widerstände als PIN-Dioden ausgebildet sind, welche im Durchlassbereich von einem Gleichstrom durchflossen werden und der Ausgang der RC-Filterschaltung auf einen HF-Kurzschluss (58) führt.

10. Vorrichtung nach einem der Ansprüche 1 bis 9, **dadurch gekennzeichnet, dass** eine Einstellung des Reflexionsmodulators (40) auf Reflexionsfreiheit für das in den Reflexionsmodulator (40) laufende Signal einstellbar ist, so dass an dem zweiten Tor (37) nur die vom Übersprechen oder von der Antenne herrührenden Signalanteile auftreten und dem Signalprozessor (46) zur Messung zuführbar sind.

11. Vorrichtung nach einem der Ansprüche 1 bis 10 **dadurch gekennzeichnet, dass** das dritte Tor (38) zur Antenne (35) auf einen reflexionsfreien Abschlusswiderstand (59a) umschaltbar ist, so dass an dem zweiten Tor (37) nur die vom Reflexionsmodulator (40) herrührenden Signalanteile auftreten und dem Signalprozessor (46) zur Messung zuführbar sind.

12. Vorrichtung nach Anspruch 4, **dadurch gekennzeichnet, dass** das fixe Dämpfungsglied (43a) überbrückbar ist und eine Einstellung des Reflexionsmodulators (40) auf Vollreflexion für das in den Reflexionsmodulator (40) laufende Signal einstellbar ist.

13. Verfahren zum Betrieb eines RFID Schreib-/Lesegeräts (30) mit einer Sendesignalunterdrückung, wobei das RFID Schreib-/Lesegerät (30) einen Sender (33), einen Empfänger (48) mit einem Signalprozessor (46), einen Richtkoppler (34) mit einem ersten, zweiten, dritten und vierten Tor (36, 37, 38, 39) und eine Antenne (35) umfasst, **dadurch gekennzeichnet, dass** ein Reflexionsmodulator (40) an dem vierten Tor (39) des Richtkopplers (34) ein erstes und ein zweites Einstellglied (41, 42) aufweist und ein Reflexionsfaktor des Reflexionsmodulators (40) so eingestellt wird, dass eine in Amplitude und Phase gewichtete Kopie eines Sendesignals des RFID Schreib-/Lesegeräts (30) zum Richtkoppler (34) reflektiert wird, welche Kopie des Sendesignals im Richtkoppler (34) unerwünschte Sendesignalanteile an dem zum Empfänger (48) führenden zweiten Tor (37) unterdrückt.

14. Verfahren nach Anspruch 13, **dadurch gekennzeichnet, dass** die Unterdrückung mit Hilfe eines geschlossenen Regelkreises erreicht wird, wobei als Mass einer angestrebten Unterdrückung ein Gleichspannungsanteil an einem ersten und zweiten Ausgang (I/Q-Ausgängen) eines RX-Konverters (49) in dem Signalprozessor (46) des RFID Schreib-/Lesegeräts (30) eingelesen wird und dieser Gleichspannungsanteil auf den Zielwert 0 Volt geregelt wird.

15. Verfahren nach Anspruch 13, **dadurch gekennzeichnet, dass** der Reflexionsmodulator (40) auf Grund einer Amplituden- und Phasenmessung an einem Sendesignal eingestellt wird, welchem Sendesignal ein Hilfssignal (22) mit einem Frequenzoffset fd zu einem Trägersignal (21) des RFID Schreib-/Lesegeräts (30) aufgeprägt ist, zwecks einer gleichspannungsfreien Verarbeitung im Empfänger (48) nach dem RX-Konverter (49).

16. Verfahren nach Anspruch 15, **dadurch gekennzeichnet, dass** das Trägersignal (21) mit einem kleinem Hub in der Amplitude moduliert oder mit einem Seitenbandsignal addiert wird.

17. Verfahren nach einem der Ansprüche 15 oder 16, **dadurch gekennzeichnet, dass** die Unterdrückung mit Hilfe eines geschlossenen Regelkreises erreicht wird, wobei als Mass der erreichten Unterdrückung ein Wechselspannungsanteil der Frequenz fd an einem ersten und zweiten Ausgang (I/Q-Ausgängen) eines RX-Konverters (49) in dem Signalprozessor (46) des RFID Schreib-/Lesegeräts (30) eingelesen wird und dieser Wechselspannungsanteil auf den Zielwert 0 Volt geregelt wird.

18. Verfahren nach einem der Ansprüche 13 bis 17, **dadurch gekennzeichnet, dass** sowohl das Sendesignal wie auch die in Amplitude und Phase gewichtete Kopie des Sendesignals vom Reflexionsmodulator (40) einzeln ein- und ausschaltbar sind, um die Amplituden- und Phasengrössen eines Kopplungssignals und eines Refleklionssignals im Signalprozessor (46) einzeln erfassen zu können, um daraus eine Einstellung des Reflexionsmodulators (40) für eine unmittelbar wirksame Unterdrückung zu errechnen.

19. Verfahren nach einem der Ansprüche 13 bis 18, **dadurch gekennzeichnet, dass** eine Nichtlinearität in einer Kennlinie des Einstellglieds (41, 42) des Reflexionsmodulators (40) durch eine Umrechnung in dem Signalprozessor (46) linearisiert wird.

20. Verfahren nach einem der Ansprüche 13 bis 19, **dadurch gekennzeichnet, dass** nach der unmittelbaren Einstellung einer ersten Unterdrückung eine Verbesserung durch Nachregelung mit Hilfe von Regelalgorithmen im Signalprozessor (46) durchgeführt wird.

21. Verfahren nach einem der vorgehenden Ansprüche, **dadurch gekennzeichnet, dass** durch eine Einstellung des Reflexionsmodulators (40) auf Vollreflexion die reflektierte Signalleistung am zweiten Tor (37) proportional zur Sendeleistung verfügbar wird und dem Empfänger (48) zur Bestimmung der Sendeleistung zuführbar wird.

## Claims

1. An apparatus for operating an RFID writing/reading device (30) with transmitted signal suppression, wherein the RFID writing/reading device (30) comprises a transmitter (33), a receiver (48) with a signal processor (46), a directional coupler (34) with a first, second, third and fourth port (36,37,38,39), and an antenna (35), **characterised in that** a reflection modulator (40) is connected to the fourth port (39) of the directional coupler (34), wherein the reflection modulator (40) has a first adjusting element (41,53,56) and a second adjusting element (42,54,57), whereby a copy of a transmitted signal, the amplitude and phase of which copy have been weighted, from the RFID writing/reading device (30) can be reflected to the directional coupler (34) and this weighted copy of the transmitted signal in the directional coupler (34) can be added to a received signal from the antenna (35).

2. An apparatus according to Claim 1, **characterised in that** the reflection modulator (40) comprises a signal splitter (51), a delay line (52) of electrical length 45° and a first and a second electronically variable resistor (53,54) as the terminating load.

3. An apparatus according to Claim 1, **characterised in that** the reflection modulator (4) is in the form of a passive vector modulator comprising an electronically variable attenuator (56) and an electronically variable phase shifter (57).

4. An apparatus according to Claims 1 to 3, **characterised in that** a fixed attenuator (43a), which can be switched on, is connected upstream of the reflection modulator (40).

5. An apparatus according to Claim 2, **characterised in that** the first and second electronically variable resistors (53,54) are each provided using at least one PIN diode (positive intrinsic negative diode) which can be operated in the passband range by a direct current.

6. An apparatus according to Claim 2, **characterised in that** the first and second electronically variable resistors (53,54) are each provided using at least one field effect transistor which can be operated in the ohmic characteristic curve region.

7. An apparatus according to Claim 3, **characterised in that** the electronically variable attenuator (56) comprises a PI-shaped or T-shaped resistor network, wherein at least one resistor in this resistor network is electronically variable.

8. An apparatus according to Claim 3, **characterised in that** the electronically variable phase shifter (57) comprises an LC filter circuit, wherein at least one capacitance is formed by a capacitance diode, to which a DC voltage is applied in the blocking region and whose output is terminated using an HF short circuit (58).

9. An apparatus according to Claim 3, **characterised in that** the electronically variable phase shifter (57) comprises an RC filter circuit, wherein at least one capacitance is formed by a capacitance diode, to which a DC voltage is applied in the blocking region, or wherein the resistors are in the form of PIN diodes through which a direct current flows in the passband range and the output of the RC filter circuit leads to an HF short circuit.

10. An apparatus according to any one of Claims 1 to 9, **characterised in that** adjustment of the reflection modulator (40) can be set to freedom from reflection for the signal running into the reflection modulator (40), so that only the signal components originating from cross-talk or from the antenna occur at the second port (37) and can be supplied to the signal processor (46) for measurement.

11. An apparatus according to any one of Claims 1 to 10, **characterised in that** the third port (38) to the antenna (35) can be changed over to a reflection-free termination resistor (59a), so that only the signal components originating from the reflection modulator (40) occur at the second port (37) and can be supplied to the signal processor (46) for measurement.

12. An apparatus according to Claim 4, **characterised in that** the fixed attenuator (43a) can be bridged and the reflection modulator (40) can be set to full reflection for the signal passed into the reflection modulator (40).

13. A method for operating an RFID writing/reading device (30) with transmitted signal suppression, wherein the RFID writing/reading device (30) comprises a transmitter (33), a receiver (48) with a signal processor (46), a directional coupler (34) with a first, second, third and fourth port (36,37,38,39), and an antenna (35), **characterised in that** a reflection modulator (40) at the fourth port (39) of the directional coupler (34) has a first and a second adjusting element (41,42), and a reflection factor of the reflection modulator (40) is set so that a copy of a transmitted signal, the amplitude and phase of which copy have been weighted, from the RFID writing/reading device (30) is reflected to the directional coupler (34), which copy of the transmitted signal in the directional coupler (34) suppresses undesirable transmitted signal components at the second port (37) leading to the receiver (48).

14. A method according to Claim 13, **characterised in that** the suppression is achieved by means of a closed control loop, wherein a DC voltage component at a first and a second output (I/Q outputs) of an RX converter (49) is read into the signal processor (46) of the RFID writing/reading device (30) as a measure of an intended suppression, and this DC voltage component is controlled to the target value of 0 volts.

15. A method according to Claim 13, **characterised in that** the reflection modulator (40) is set on the basis of an amplitude and phase measurement of a transmitted signal, to which transmitted signal an auxiliary signal (22) is applied with a frequency offset fd with respect to a carrier signal (21) of the RFID writing/reading device (30) for the purpose of DC voltage-free processing in the receiver (48) downstream of the RX converter (49).

16. A method according to Claim 15, **characterised in that** the carrier signal (21) is amplitude-modulated with a small swing or is added to a sideband signal.

17. A method according to Claim 15 or 16, **characterised in that** the suppression is achieved by means of a closed control loop, wherein an AC voltage component of the frequency fd at a first and a second output (I/Q outputs) of an RX converter (49) is read into the signal processor (46) of the RFID writing/reading device (30) as a measure of the suppression achieved, and this AC voltage component is controlled to the target value of 0 volts.

18. A method according to any one of Claims 13 to 17, **characterised in that** both the transmitted signal and the copy of the transmitted signal, the amplitude and phase of which copy have been weighted, can be individually switched on and off by the reflection modulator (40) so as to be able to detect individually the amplitude and phase variables of a coupling signal and a reflected signal in the signal processor (46) so as to calculate therefrom a setting of the reflection modulator (40) for an immediately effective suppression.

19. A method according to any one of Claims 13 to 18, **characterised in that** a non-linearity in a characteristic curve of the adjusting element (41,42) of the reflection modulator (40) is linearised by a conversion in the signal processor (46).

20. A method according to any one of Claims 13 to 19, **characterised in that** after the immediate setting of a first suppression, an improvement is carried out by readjustment by means of control algorithms in the signal processor (46).

21. A method according to any one of the preceding Claims, **characterised in that** by setting the reflection modulator (40) to full reflection, the reflected signal power becomes available at the second port (37) proportionally to the transmitted power and can be supplied to the receiver (48) for determining the transmitted power.

## Revendications

1. Dispositif pour faire fonctionner un appareil de lecture-écriture RFID (à identification par radiofréquence) (30) avec une suppression de signal d'émission, l'appareil de lecture-écriture RFID (30) comprenant un émetteur (33), un récepteur (48) avec un processeur de signaux (46), un coupleur directionnel (34) avec des première, deuxième, troisième et quatrième portes (36, 37, 38, 39), et une antenne (35), **caractérisé en ce qu'**un modulateur de réflexion (40) est relié à la quatrième porte (39) du coupleur directionnel (34), le modulateur de réflexion (40) comportant un premier organe de réglage (41, 53, 56) et un second organe de réglage (42, 54, 57), moyennant quoi une copie, à amplitude et phase pondérées, d'un signal d'émission de l'appareil de lecture-écriture RFID (30) est apte à être réfléchie vers le coupleur (34) et cette copie pondérée du signal d'émission est apte à être ajoutée dans le coupleur (34) à un signal de réception de l'antenne (35).

2. Dispositif selon la revendication 1, **caractérisé en ce que** le modulateur de réflexion (40) comprend un diviseur de signaux (51), une ligne de retard (52) de la longueur électrique 45° et des première et seconde résistances variables électroniquement (53, 54) comme charge terminale.

3. Dispositif selon la revendication 1, **caractérisé en ce que** le modulateur de réflexion (40) est conçu comme un modulateur vectoriel passif comprenant un affaiblisseur (56) réglable électroniquement et un déphaseur (57) réglable électroniquement.

4. Dispositif selon les revendications 1 à 3, **caractérisé en ce qu'**un affaiblisseur (43a) apte à être ajouté et fixe est monté en amont du modulateur de réflexion (40).

5. Dispositif selon la revendication 2, **caractérisé en ce que** les première et seconde résistances réglables électroniquement (53, 54) sont réalisées chacune à l'aide d'au moins une diode PIN (positive intrinsic negative diode) (53, 54) qui est apte à fonctionner dans la zone passante grâce à un courant continu.

6. Dispositif selon la revendication 2, **caractérisé en ce que** les première et seconde résistances réglables électroniquement (53, 54) sont réalisées chacune à l'aide d'un transistor à effet de champ qui est apte à fonctionner dans la zone de courbe caractéristique ohmique.

7. Dispositif selon la revendication 3, **caractérisé en ce que** l'affaiblisseur réglable électroniquement (56) comprend un réseau de résistance en T ou PI, au moins une résistance de ce réseau de résistance étant variable électroniquement.

8. Dispositif selon la revendication 3, **caractérisé en ce que** le déphaseur réglable électroniquement (57) comprend un circuit filtrant LC, au moins une capacité étant formée par une diode de capacité à laquelle une tension continue est appliquée dans la zone de coupure et dont la sortie se termine par un court-circuit HF (58).

9. Dispositif selon la revendication 3, **caractérisé en ce que** le déphaseur réglable électroniquement (57) comprend un circuit filtrant RC, au moins une capacité étant formée par une diode de capacité à laquelle une tension continue est appliquée dans la zone de coupure, ou les résistances étant conçues comme des diodes PIN qui sont traversées par un courant continu dans la zone passante, et la sortie du circuit filtrant RC mène à un court-circuit HF (58).

10. Dispositif selon l'une des revendications 1 à 9, **caractérisé en ce qu'**un réglage du modulateur de réflexion (40) pour une absence de réflexion pour le signal arrivant dans ledit modulateur de réflexion (40) est réalisable, de sorte qu'au niveau de la porte (37) seules les parties de signaux provenant d'une diaphonie ou de l'antenne apparaissent et peuvent être transmises au processeur de signaux (46) en vue d'une mesure.

11. Dispositif selon l'une des revendications 1 à 10, **caractérisé en ce que** la troisième porte (38) qui mène à l'antenne (35) est apte à passer à une résistance terminale sans réflexion (59a), de sorte qu'au niveau de la porte (37) seules les parties de signaux provenant du modulateur de réflexion (40) apparaissent et peuvent être transmises au processeur de signaux (46) en vue d'une mesure.

12. Dispositif selon la revendication 4, **caractérisé en ce que** l'affaiblisseur fixe (43a) est apte à être court-circuité et le modulateur de réflexion (40) peut être réglé sur une réflexion totale pour le signal arrivant dans ledit modulateur de réflexion (40).

13. Procédé pour faire fonctionner un appareil de lecture-écriture RFID (à identification par radiofréquence) (30) avec une suppression de signal d'émission, l'appareil de lecture-écriture RFID (30) comprenant un émetteur (33), un récepteur (48) avec un processeur de signaux (46), un coupleur directionnel (34) avec des première, deuxième, troisième et quatrième portes (36, 37, 38, 39), et une antenne (35), **caractérisé en ce qu'**un modulateur de réflexion (40) comporte au niveau de la quatrième porte (39) du coupleur directionnel (34) des premier et second organes de réglage (41, 42), et un facteur de réflexion du modulateur de réflexion (40) est réglé de telle sorte qu'une copie, à amplitude et phase pondérées, d'un signal d'émission de l'appareil de lecture-écriture RFID (30) est réfléchie vers le coupleur (34), laquelle copie du signal d'émission supprime au niveau de la deuxième porte (37) qui mène au récepteur (48) les parts de signaux d'émission indésirables dans le coupleur directionnel (34).

14. Procédé selon la revendication 13, **caractérisé en ce que** la suppression est obtenue à l'aide d'une boucle de régulation fermée, étant précisé qu'une part de tension continue est entrée, comme mesure d'une suppression souhaitée, au niveau d'une première et d'une seconde sortie (sorties I/Q) d'un convertisseur RX (49) dans le processeur de signaux (46) de l'appareil de lecture-écriture RFID (30), et que cette part de tension continue est réglée à la valeur cible de 0 volt.

15. Procédé selon la revendication 13, **caractérisé en ce que** le modulateur de réflexion (40) est réglé sur la base d'une mesure d'amplitude et de phase au niveau d'un signal d'émission auquel est appliqué un signal auxiliaire (22) avec un décalage de fréquence fd par rapport à un signal porteur (21) de l'appareil de lecture-écriture RFID (30), en vue d'un traitement sans tension continue dans le récepteur (48) après le convertisseur RX (49).

16. Procédé selon la revendication 15, **caractérisé en ce que** le signal porteur (21) est modulé en amplitude avec une petite excursion ou est ajouté à un signal de bande latérale.

17. Procédé selon l'une des revendications 15 ou 16, **caractérisé en ce que** la suppression est obtenue à l'aide d'une boucle de régulation fermée, étant précisé qu'une part de tension alternative de la fréquence fd est entrée, comme mesure de la suppression obtenue, au niveau d'une première et d'une seconde sortie (sorties I/Q) d'un convertisseur RX (49) dans le processeur de signaux (46) de l'appareil de lecture-écriture RFID (30), et que cette part de tension alternative est réglée à la valeur cible de 0 volt.

18. Procédé selon l'une des revendications 13 à 17, **caractérisé en ce qu'**à la fois le signal d'émission et la copie, à amplitude et phase pondérées, du signal d'émission sont mis individuellement en circuit et hors circuit par le modulateur de réflexion (40) pour pouvoir détecter individuellement les grandeurs d'amplitude et de phase d'un signal de couplage et d'un signal de réflexion dans le processeur de signaux (46), afin de calculer à partir de là un réglage du modulateur de réflexion (40) pour une suppression directement efficace.

19. Procédé selon l'une des revendications 13 à 18, **caractérisé en ce qu'**une non linéarité dans une courbe caractéristique de l'organe de réglage (41, 42) du modulateur de réflexion (40) est linéarisée par une conversion dans le processeur de signaux (46).

20. Procédé selon l'une des revendications 13 à 19, **caractérisé en ce qu'**après le réglage direct d'une première suppression, une amélioration est effectuée grâce à un rajustement à l'aide d'algorithmes de régulation dans le processeur de signaux (46).

21. Procédé selon l'une des revendications précédentes, **caractérisé en ce que** grâce à un réglage du modulateur de réflexion (40) sur une réflexion totale, la puissance de signal réfléchie au niveau de la deuxième porte (37) devient disponible proportionnellement à la puissance d'émission et devient apte à être transmise au récepteur (48) pour définir la puissance d'émission.
